# DEMANDE DE BREVET EUROPEEN

(11) **EP 1 544 439 A1**
(43) Date de publication de la demande: **22.06.2005**
(21) Numéro de dépôt: 04292609.7
(22) Date de dépôt: 03.11.2004
(51) Int. Cl.: F02D 19/06, F02D 41/00

(54) **Système de gestion du fonctionnement d'un moteur thermique d'un véhicule automobile**

(30) Priorité: 18.12.2003 FR 0314906
(71) Demandeur: Peugeot Citroen Automobiles S.A., 78140 Vélizy Villacoublay (FR)
(72) Inventeur: Francois, Henri, 78570 Andresy (FR)
(74) Mandataire: Blot, Philippe Robert Emile

(57) **Abrégé**

L'invention concerne un système de gestion du fonctionnement d'un moteur thermique d'un véhicule automobile, le moteur (1) étant adapté pour être alimenté avec des carburants de différents types (C1, C2) et associé à des moyens d'admission (2) des gaz en entrée de celui-ci.

Ce système est caractérisé en ce qu'il comporte en outre des moyens (11) de modification des conditions de fonctionnement des moyens d'admission (2) des gaz en fonction du type (C1, C2) de carburant alimentant le moteur.

## Description

L'invention concerne un système de gestion du fonctionnement d'un moteur thermique d'un véhicule automobile.

Certains moteurs sont adaptés pour être alimentés avec des carburants de différents types. C'est ainsi que l'on connaît déjà dans l'état de la technique des moteurs pouvant fonctionner à partir de carburants tels que par exemple de l'essence et du gaz.

Cependant, les conditions de fonctionnement de ces moteurs doivent alors être adaptées en fonction du type de carburant utilisé.

On a déjà proposé dans l'état de la technique, par exemple par le document GB 2 345 678, de contrôler les moyens d'alimentation en carburant du moteur en fonction du type de carburant.

Ce document décrit effectivement une unité de contrôle du fonctionnement d'un moteur propre à être alimenté par du gaz naturel ou par de l'essence. Cette unité de contrôle est reliée à une mémoire dans laquelle sont stockés des paramètres spécifiques d'alimentation en carburant du moteur, c'est-à-dire en gaz ou en essence. Ces paramètres comprennent notamment des informations de calibrage du moteur, de température, de charge et de vitesse du moteur. Cette unité de contrôle commande l'injection de carburant dans le moteur en fonction du type de carburant, des paramètres stockés dans la mémoire et de la charge du moteur.

La présente invention a pour but de proposer un système de gestion alternatif adapté pour optimiser le rendement d'un moteur polycarburant en fonction du type de carburant utilisé.

A cet effet l'invention a pour objet un système de gestion du fonctionnement d'un moteur thermique d'un véhicule automobile, le moteur étant adapté pour être alimenté avec des carburants de différents types et associé à des moyens d'admission des gaz en entrée de celui-ci, caractérisé en ce qu'il comporte en outre des moyens de modification des conditions de fonctionnement des moyens d'admission des gaz en fonction du type de carburant alimentant le moteur.

Suivant d'autres caractéristiques :
- les moyens d'admission des gaz comprennent un volet-papillon motorisé dont le déplacement est commandé par des moyens de pilotage à partir d'une loi de pilotage sélectionnée par les moyens de modification en fonction du type de carburant d'alimentation utilisé, parmi des lois pré-établies correspondant aux différents types de carburant d'alimentation possible ;
- lesdites lois de pilotage délimitent chacune une plage différente de déplacement du volet-papillon dans laquelle le déplacement du volet-papillon est déterminé en fonction d'informations de commande du moteur ;
- la limite supérieure de chaque plage de déplacement est différente et est définie en fonction du type de carburant ;
- les moyens d'admission des gaz comprennent en outre des moyens de variation de la section de passage des gaz pilotés par les moyens de modification en fonction du type de carburant d'alimentation utilisé ;
- les moyens de variation de la section de passage comprennent un ou plusieurs conduits de passage des gaz et au moins un conduit comporte des moyens formant vanne de contrôle de la section de passage dudit conduit, lesdits moyens formant vanne de contrôle étant déplaçables sous le contrôle des moyens de modification entre une position de fermeture du conduit et une position d'ouverture de celui-ci en fonction du type de carburant d'alimentation utilisé ;
- les moyens de variation de la section de passage comprennent deux conduits de passage dont un seul comprend des moyens formant vanne de contrôle de la section de passage ;
- les moyens d'admission des gaz comporte en outre des moyens formant filtre à air et en ce que les moyens de variation de la section de passage sont disposés en amont, en aval ou au niveau des moyens formant filtre à air ;
- les moyens de modification des conditions de fonctionnement des moyens d'admission d'air comprennent un calculateur multifonction moteur.

L'invention sera mieux comprise à l'aide de la description qui va suivre, donnée uniquement à titre d'exemple et faite en se référant aux dessins annexés sur lesquels :
- la figure 1 est un schéma synoptique illustrant la structure et le fonctionnement d'un premier exemple de réalisation d'un système de gestion selon l'invention ;
- la figure 2 est un schéma synoptique illustrant la structure et le fonctionnement d'un second exemple de réalisation d'un système selon l'invention ; et
- les figures 3, 4 et 5 illustrent différentes variantes de réalisation de moyens de variation de la section de passage des gaz dans un système selon le second exemple de réalisation de l'invention.

Comme indiqué précédemment, l'invention se rapporte à un système de gestion du fonctionnement d'un moteur thermique d'un véhicule automobile.

Ce moteur est associé de façon classique à des moyens d'admission des gaz en entrée de celui-ci et est adapté pour être alimenté avec des carburants de différents types.

Selon l'invention, ce système comporte en outre des moyens de modification des conditions de fonctionnement des moyens d'admission des gaz en fonction du type de carburant alimentant le moteur.

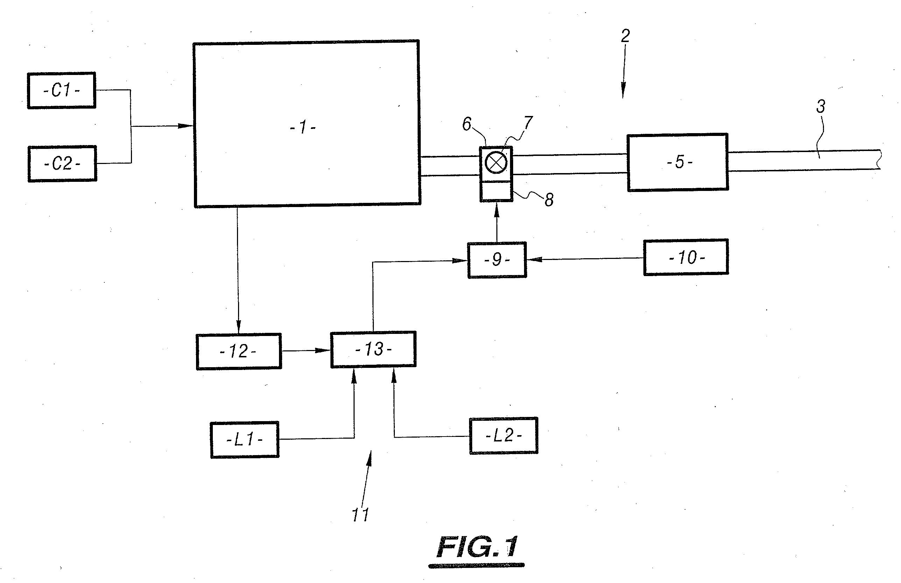

On a illustré sur la figure 1, un exemple de réalisation d'un tel système.

On reconnaît en effet sur cette figure, un moteur thermique de véhicule automobile désigné par la référence générale 1, adapté pour être alimenté par plusieurs types de carburant différents tels que par exemple de l'essence et du gaz, schématisés par les références C1, C2 sur la figure 1.

Le moteur 1 présente de façon classique un rapport volumétrique optimisé pour un type de carburant. Le rapport volumétrique d'un moteur est défini de façon classique par la somme du volume de la chambre de combustion additionné du volume des cylindres du moteur, divisée par le volume de la chambre de combustion du moteur.

Selon l'invention, le moteur 1 présente de préférence un rapport volumétrique égal au rapport volumétrique le plus élevé parmi les différents rapports volumétriques correspondant chacun à un rendement optimisé avec un type de carburant d'alimentation possible.

Le moteur 1 est associé à des moyens d'admission des gaz en entrée de celui-ci, désignés par la référence générale 2.

De façon classique, ces moyens d'admission 2 des gaz comprennent un conduit 3 d'amenée des gaz, des moyens 5 formant filtre à air et un boîtier de papillon 6.

Le conduit 3 d'amenée des gaz permet l'alimentation en gaz du moteur.

Dans l'exemple de réalisation décrit sur cette figure 1, le boîtier de papillon 6 est un boîtier de papillon motorisé de type classique comportant un volet papillon 7. Les déplacements du volet papillon 7 sont commandés par un moteur de type pas à pas 8.

Le boîtier de papillon 6 comporte classiquement des capteurs et notamment des capteurs de température et de pression des gaz et de position angulaire du volet papillon 7. Les informations issues de ces capteurs sont envoyées à un calculateur multifonction moteur et permettent de calculer la quantité de carburant à injecter dans le moteur de façon classique.

L'actionnement du moteur pas à pas 8 est contrôlé par des moyens de pilotage 9 en fonction d'informations de commande du moteur telles que délivrées par des moyens de détermination 10.

Les moyens de détermination 10 comprennent par exemple un capteur de position qui mesure les déplacements de la pédale de commande d'accélérateur du véhicule et délivrent des informations concernant la commande moteur exercée par le conducteur du véhicule.

Selon l'invention, les moyens de pilotage 9 du moteur pas à pas 8 sont associés à des moyens de modification 11 des conditions de fonctionnement des moyens d'admission 2 des gaz en fonction du type de carburant alimentant le moteur.

Ces moyens, désignés par la référence générale 11, comprennent des moyens de détermination 12 du type C1, C2 de carburant utilisé pour alimenter le moteur et des moyens de sélection 13, raccordés à ceux-ci, pour sélectionner une loi de pilotage utilisable par les moyens de pilotage 9 pour commander les déplacements du volet papillon 7, parmi des lois préétablies L1, L2 correspondant chacune à un type de carburant d'alimentation possible.

Ainsi, quand le moteur est propre à être alimenté par du gaz naturel et de l'essence, une loi de pilotage L1 correspondant à une alimentation en gaz et une loi L2 correspondant à une alimentation en essence sont pré-établies et associées aux moyens de sélection 13.

En fonction du type de carburant d'alimentation du moteur, les moyens de sélection 13 choisissent alors l'une ou l'autre de ces lois de pilotage pour assurer un pilotage correct des moyens d'admission 2 des gaz et plus particulièrement du boîtier de papillon motorisé 6.

Ces lois délimitent par exemple chacune une plage différente de déplacement du volet papillon 7, dans laquelle le déplacement de ce volet papillon 7 est déterminé en fonction des informations de régime du moteur et de puissance désirée de façon classique. Ainsi, chaque loi de pilotage L1, L2 est propre à un type C1, C2 de carburant donné et définit la quantité d'air à injecter dans le moteur en fonction du régime moteur demandé par le conducteur.

Par exemple, la limite supérieure de chaque plage de déplacement est différente et est définie en fonction du type de carburant. De façon plus précise, la limite supérieure de la loi de pilotage L1, L2 correspond à une ouverture maximale du volet papillon 7 pour obtenir un taux de compression réelle correspondant à un rapport volumétrique optimisé avec un certain type de carburant.

Selon l'invention, les moyens de modification 11 des conditions de fonctionnement des moyens d'admission 2 d'air sont implémentés dans un calculateur indépendant ou dans le calculateur multifonction moteur.

Selon un exemple de réalisation de l'invention, le moteur 1 est propre à être alimenté soit avec du gaz naturel pour véhicule GNV soit avec de l'essence et son rapport volumétrique correspond au rapport volumétrique optimisé pour le gaz. Le rapport volumétrique optimisé pour le gaz est par exemple égal à 13.

Lorsque le moteur 1 est alimenté avec du gaz, les moyens de détection 12 envoient aux moyens de sélection 13 une information définissant que le moteur fonctionne avec du gaz. Les moyens de sélection 13 sélectionnent alors la loi de pilotage L1 correspondant à un carburant de type gaz et transmettent cette loi L1 aux moyens de pilotage 9.

Lorsque le conducteur fait fonctionner le moteur à plein, les moyens de détermination 10 communiquent aux moyens de pilotage 9 un ordre d'un remplissage maximal d'air.

Les moyens de pilotage 9 transmettent au moteur pas à pas 8, une requête correspondant à la limite supérieure de la loi de pilotage L1 de l'alimentation en gaz. Cette requête est par exemple égale à 1.

Le volet papillon 7 est alors déplacé dans une position d'ouverture maximale du conduit 3 d'amenée des gaz. Le moteur fonctionne à pleine charge. Le taux de compression des gaz dans la chambre de combustion du moteur correspond au rapport volumétrique optimisé pour une alimentation du moteur en gaz. Il est alors environ égal à 13.

Lorsque le conducteur souhaite faire fonctionner le moteur à un régime moyen, les moyens de pilotage 9 envoient au moteur pas à pas 8, une commande d'un remplissage d'air limité correspondant environ à un point médian de la loi de pilotage L1. Cette commande est par exemple égale à 0,85.

Le volet papillon 7 est déplacé dans une position semi-fermée. Le moteur fonctionne à charge moyenne. Le taux de compression des gaz dans la chambre de combustion du moteur est environ égal à 11.

Lorsque le moteur 1 fonctionne avec de l'essence, les moyens de sélection 13 sélectionnent, à partir des informations reçues par les moyens de détection 12, la loi de pilotage L2 correspondant à un carburant de type essence.

Lorsque le conducteur fait fonctionner le moteur à plein, les moyens de pilotage 9 transmettent au moteur pas à pas 8, une requête d'un remplissage d'air maximal correspondant à la limite supérieure de la loi de pilotage L2 de l'alimentation en essence. Cette limite est différente de la limite supérieure de la loi de pilotage L1 et est par exemple égale à 0,85.

Le volet papillon est alors déplacé dans une position semi-fermée. Le taux de compression de l'essence dans la chambre de combustion du moteur correspond au rapport volumétrique optimisé pour une alimentation du moteur en essence. Il est alors environ égal à 11.

En conséquence, les moyens de modification 11 commandent les moyens d'admission 2 en gaz pour adapter la quantité d'air admise dans le moteur en fonction du type de carburant et pour modifier le taux de compression dans la chambre de combustion du moteur pour correspondre à un rendement optimisé pour chaque type de carburant.

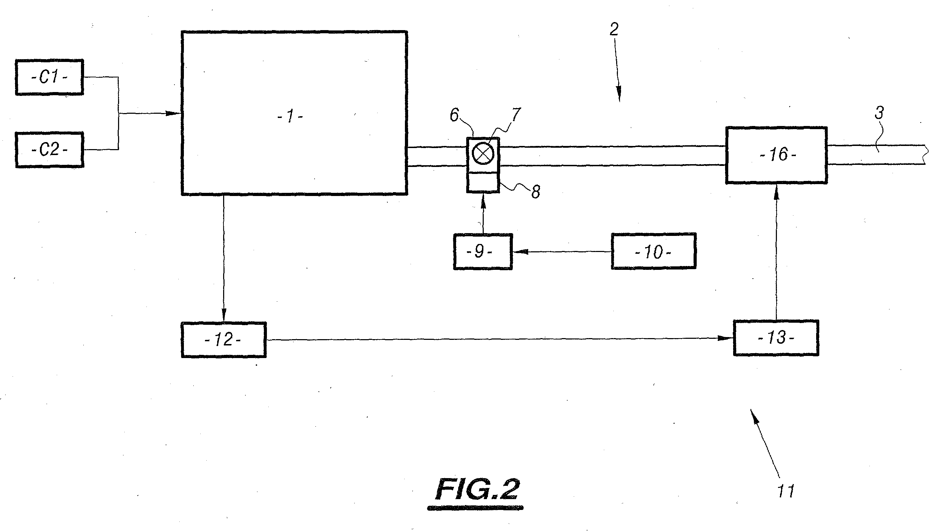

La figure 2 représente un second mode de réalisation du système de gestion du fonctionnement d'un moteur selon l'invention dans lequel le moteur est également apte à être alimenté par deux types C1, C2 de carburant.

Des numéros de références identiques désignent des éléments identiques ou équivalents à ceux représentés sur la figure 1.

Les moyens d'admission des gaz 2 comprennent un boîtier de papillon motorisé 6 et des moyens de variation 16 de la section de passage des gaz disposés le long du conduit 3 d'amenée des gaz en amont du boîtier de papillon 6.

Les déplacements du volet papillon 7 motorisé sont pilotés de façon classique, par les moyens de pilotage 9 en fonction des informations de commande du moteur issues des moyens de détermination 10.

Les moyens de modification 11 comportent toujours les moyens de sélection 13 qui pilotent des moyens de variation 16 en fonction du type de carburant utilisé tel que détecté par les moyens de détermination 12.

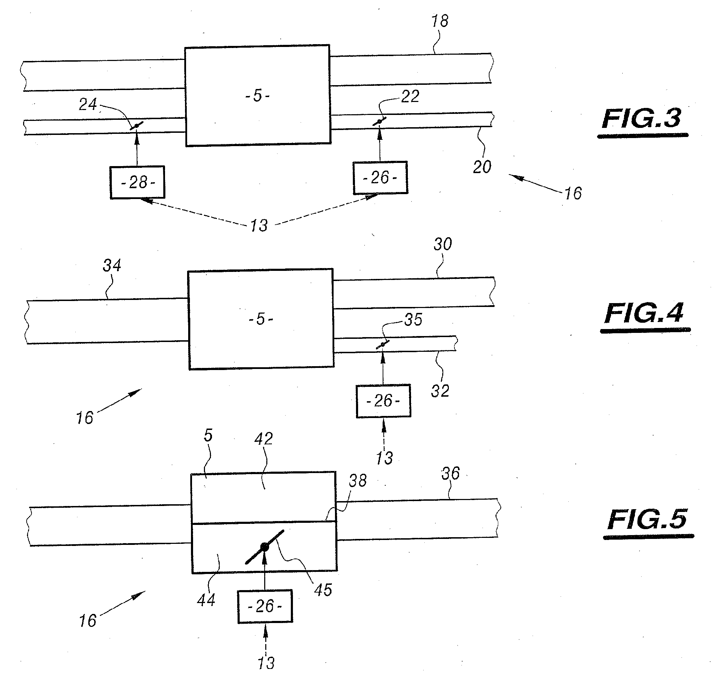

Différentes variantes de réalisation de ces moyens de variation 16 sont illustrées sur les figures 3, 4 et 5.

Les moyens de variation 16 de la section de passage représentés sur la figure 3, comprennent un premier 18 et un second 20 conduits de passage des gaz traversant les moyens formant filtre 5 et au moins une vanne de contrôle 22, 24 de la section de passage. Ainsi, deux volets 22, 24, par exemple de type volet papillon ou volet drapeau sont fixés par exemple à l'intérieur du second conduit 20 en amont et en aval des moyens formant filtre 5 (les volets peuvent être disposés dans le premier conduit 18). Chaque volet 22, 24 est apte à être déplacé par un moteur 26, 28 commandé par les moyens de sélection 13.

Les moyens de détermination 12, raccordés aux moyens de sélection 13, sont propres à déterminer et/ou à être informés du type C1, C2 de carburant utilisé par le moteur 1 et à envoyer cette information aux moyens de sélection 13. Les moyens de sélection 13 commandent alors l'ouverture et ou la fermeture des moyens de variation 16 de la section de passage en fonction du type de carburant d'alimentation utilisé pour modifier les conditions d'admission du gaz dans le moteur.

Une variante de réalisation des moyens de variation 16 de la section de passage est représentée sur la figure 4. Selon cette variante, les moyens de variation 16 comprennent deux conduits 30, 32 en amont des moyens formant filtre 5 et un conduit 34 en aval de celui-ci. Le conduit 34 a une section correspondant environ à la somme des sections des conduits 30 et 32. Le conduit 32 comprend un volet 35 formant vanne de contrôle apte pour être déplacé entre une position d'ouverture et une position de fermeture par le moteur 26 piloté par les moyens de sélection 13.

Alternativement, les conduits 30 et 32 sont présents en aval des moyens 5 formant filtre et le conduit 34 en amont de celui-ci.

Une autre variante de réalisation des moyens de variation 16 de la section de passage est représentée sur la figure 5. Selon cette variante, les moyens de variation 16 comprennent un unique conduit 36 traversant les moyens 5 formant filtre. Au niveau des moyens formant filtre 5, le conduit 36 comprend une cloison de séparation 38 qui scinde ce conduit 36 en deux canaux 42, 44 de passage des gaz. Le canal 44 comprend un volet 45 formant vanne de contrôle déplaçable par le moteur 26 sur commande des moyens de détermination 13. Le volet 45 pourrait également être fixé dans le conduit 36 entre une paroi du conduit et une butée.

Bien entendu, d'autres modes de réalisation des moyens de variation 16 peuvent être envisagés.

Lorsque le moteur 1 est propre à être alimenté par deux types de carburant possibles et que les moyens de variation 16 comprennent deux conduits 18 et 20 ; 30 et 32 ; 42 et 44, la section de ceux-ci est déterminée en fonction du rapport volumétrique du moteur pour que lorsque chaque volet 22, 24 est dans une position d'ouverture maximale, le taux de compression dans la chambre de combustion est optimisé pour un type C1 de carburant et que, lorsque chaque volet 22, 24 est dans une position de fermeture maximale, le taux de compression dans la chambre de combustion est optimisé pour un second type C2 de carburant.

Dans ce cas, les moyens de sélection 13 pilotent alors chaque moteur 26, 28 selon une commande binaire de fermeture ou d'ouverture de chaque volet 24, 26. Alternativement chaque volet 24, 26 peut également être déplacé par un vérin pneumatique ou hydraulique ou par tout autre actionneur approprié commandé par les moyens de sélection 13.

Alternativement, la section des conduits n'est pas déterminée en fonction des taux de compression pré-établis en fonction des types de carburant. Dans ce cas, chaque volet est actionné par un moteur pas à pas commandé par les moyens de sélection en fonction du type de carburant. Chaque volet est déplacé par un moteur pas à pas, dans un nombre de positions égal au nombre de types de carburant pouvant alimenter le moteur.

Les moyens de variation de la section de passage peuvent également comprendre n conduits de passage des gaz et n-1 volets formant vanne de contrôle de la section de passage des gaz avec n supérieur à 2.

Enfin, et de manière connue en soi, le boîtier papillon motorisé 6, les moyens de pilotage 9 et les moyens de détermination 10 peuvent être remplacés par un boîtier papillon non motorisé actionné directement par un câble d'accélérateur.

## Revendications

1. Système de gestion du fonctionnement d'un moteur thermique d'un véhicule automobile, le moteur (1) étant adapté pour être alimenté avec des carburants de différents types (C1, C2) et associé à des moyens d'admission (2, 6, 16) des gaz en entrée de celui-ci, **caractérisé en ce qu'**il comporte en outre des moyens de modification des conditions de fonctionnement des moyens d'admission (2, 6, 16) des gaz en fonction du type (C1, C2) de carburant alimentant le moteur.

2. Système de gestion du fonctionnement d'un moteur selon la revendication 1, **caractérisé en ce que** les moyens d'admission (2, 6, 16) des gaz comprennent un volet-papillon motorisé (7) dont le déplacement est commandé par des moyens de pilotage (9) à partir d'une loi de pilotage (L1, L2) sélectionnée par les moyens de modification (11) en fonction du type de carburant d'alimentation utilisé, parmi des lois pré-établies (L1, L2) correspondant aux différents types (C1, C2) de carburant d'alimentation possibles.

3. Système de gestion du fonctionnement d'un moteur selon la revendication 2, **caractérisé en ce que** lesdites lois de pilotage (L1, L2) délimitent chacune une plage différente de déplacement du volet-papillon (7) dans laquelle le déplacement du volet-papillon est déterminé en fonction d'informations de commande du moteur.

4. Système de gestion du fonctionnement d'un moteur selon la revendication 3, **caractérisé en ce que** la limite supérieure de chaque plage de déplacement est différente et est définie en fonction du type de carburant.

5. Système de gestion du fonctionnement d'un moteur selon la revendication 1, **caractérisé en ce que** les moyens d'admission (2) des gaz comprennent en outre des moyens de variation (16) de la section de passage des gaz pilotés par les moyens de modification (11) en fonction du type (C1, C2) de carburant d'alimentation utilisé.

6. Système de gestion du fonctionnement d'un moteur selon la revendication 5, **caractérisé en ce que** les moyens de variation (16) de la section de passage comprennent un ou plusieurs conduits (18, 20 ; 30, 32 ; 34, 36 ; 42, 44) de passage des gaz et **en ce qu'**au moins un conduit (20 ; 32 ; 44) comporte des moyens (22, 24) formant vanne de contrôle de la section de passage dudit conduit, lesdits moyens formant vanne de contrôle étant déplaçables sous le contrôle des moyens de modification (11) entre une position de fermeture du conduit et une position d'ouverture de celui-ci en fonction du type (C1, C2) de carburant d'alimentation utilisé.

7. Système de gestion du fonctionnement d'un moteur selon la revendication 6, **caractérisé en ce que** les moyens de variation de la section (16) de passage comprennent deux conduits de passage (18, 20 ; 30, 32 ; 34, 36 ; 42, 44) dont un seul (20 ; 32 ; 34) comprend des moyens formant vanne de contrôle de la section de passage.

8. Système de gestion du fonctionnement d'un moteur selon l'une quelconque des revendications 5, 6 ou 7, **caractérisé en ce que** les moyens d'admission des gaz comporte en outre des moyens (5) formant filtre à air et **en ce que** les moyens de variation (16) de la section de passage sont disposés en amont, en aval ou au niveau des moyens (5) formant filtre à air.

9. Système de gestion du fonctionnement d'un moteur selon l'une quelconque des revendications précédentes, **caractérisé en ce que** les moyens de modification (11) des conditions de fonctionnement des moyens d'admission d'air comprennent un calculateur multifonction moteur.
